# EUROPEAN PATENT APPLICATION

(11) **EP 1 884 914 A1**
(43) Date of publication of application: **06.02.2008**
(21) Application number: 07103919.2
(22) Date of filing: 12.03.2007
(51) Int. Cl.: G09G 3/34, H04M 1/22, H04M 1/73

(54) **Method and system for reducing power consumption of a mobile communication terminal**

(30) Priority: 03.08.2006 KR 20060073365
(71) Applicant: Samsung SDI Co., Ltd., Suwon-si Gyeonggi-do (KR)
(72) Inventor: Kim, Jin Hun, Legal & IP team, Samsung SDI co., LTD., Gyeonggi-do (KR); Chung, Ji Seon, Legal & IP Team, Samsung SDI Co., LTD., Gyeonggi-do (KR); Lee, Ji Yoon, Legal IP Team, Samsung SDI Co., LTD., Gyeonggi-do (KR)
(74) Representative: Hengelhaupt, Jürgen

(57) **Abstract**

A method of reducing power consumption of a mobile terminal is disclosed. In one embodiment, the method includes i) detecting a residual capacity value of a battery (S520), ii) comparing the detected residual capacity value of the battery with a preset reference value (S530), iii) converting and establishing into a graphic user interface for a preset power saving mode, if the detected residual capacity value of the battery is below the reference value by the comparison with the reference value (S540) and iv) displaying the converted and established graphic user interface for the preset power saving mode on a display implemented as a self-emission element (S550).

## Description

### BACKGROUND

### 1. Field of the Invention

The present invention relates to a mobile terminal and a method of reducing power consumption of a mobile terminal. The invention also relates to a mobile terminal associated with the method and adopting a self-emissive display such as an organic light emitting display device, wherein a graphic user interface (GUI) of the display is converted into a GUI for a power saving mode depending on the residual capacity of a battery.

### 2. Discussion of the Related Technology

Recently, since a mobile terminal, such as a cellular phone, personal digital assistants (PDAs) and a portable multimedia player, etc., has rapidly come into wide use, most people are using at least one mobile terminal. In order to improve portability of the mobile terminal, miniaturization, slimness and lightweight of the mobile terminal have been continuously made. Accordingly, components mounted on the mobile terminal have become miniaturization and semiconductor integration.

In spite of the trend of a smaller mobile terminal, there is a need for a large sized screen so that a user can easily see the display mounted on the mobile terminal.

A flat panel display is used as a display mounted on the mobile terminal, and it is thinner than a conventional CRT display device to occupy smaller space and to reduce power consumption, meeting the display condition of the mobile terminal.

Also, as the use of the mobile terminal has become popular, it becomes important for users of the mobile terminal to use it without separate battery charging of the terminal for a long time.

Accordingly, in order to use the mobile terminal for a long time, various methods have recently been proposed to develop a high capacity battery in connection with a battery power source for determining a using time of the mobile terminal or to efficiently use the power source by minimizing the amount of power consumption, thereby improving the using time of the mobile terminal.

In particular, as methods of power saving made within the mobile terminal, a method of controlling power for the display having the greatest power consumption of the battery within the mobile terminal, that is, a flat panel display, has widely been used.

A liquid crystal display (LCD) device has been frequently used as a display for the mobile terminal, and accordingly, a method has been used to turn a backlight of the LCD device off in a power saving mode in order to reduce power consumption of the mobile terminal of which the LCD device is adopted as a display.

However, the LCD device cannot display an image when the backlight is turned off.

Also, while the backlight is turned on, power consumption is substantially the same when the image displayed through the LCD device is a black tone or a white tone, thereby having a limitation that the backlight should be turned off in order to reduce power consumption.

Further, since the LCD device requires a backlight source, it runs counter to the trend of miniaturization, slimness and lightweight of the mobile terminal.

### SUMMARY OF CERTAIN INVENTIVE EMBODIMENTS

One aspect of the present invention provides a method of reducing power consumption of a mobile terminal and a mobile terminal using said method, wherein in a mobile terminal adopting a self-emissive display such as an organic light emitting display device, the time, in which a battery of a mobile terminal is used, is extended by converting a graphic user interface (GUI) of a display into a GUI for a power saving mode in which power consumption is reduced, depending on the residual capacity of the battery, that is, when the residual capacity of the battery is smaller than a reference value.

Another aspect of the invention provides a method of reducing power consumption of a mobile terminal, comprising: detecting a residual capacity value of a battery, comparing the detected residual capacity value of the battery with a preset reference value, converting and establishing into a graphic user interface for a preset power saving mode, if the detected residual capacity value of the battery is below the reference value by the comparison with the reference value and displaying the converted and established graphic user interface for the preset power saving mode on a display implemented as a self-emission element.

The graphic user interface for the power saving mode may implement a background screen portion occupying many regions of the screen at low brightness, and implement an image or a text portion occupying a specified region of the screen at brightness higher than the same brightness, and more particularly, it is characterized in that in a whole screen displayed on the display, the brightness of R, G and B sub-pixels constituting each pixel corresponding to the background screen can be implemented to be below about 1 cd/m², and the brightness of R, G and B sub-pixels constituting each pixel corresponding to the portions displaying the image or the text can be implemented to be about 10 to about 300 cd/m².

Another aspect of the invention provides a method of reducing power consumption of a mobile terminal, comprising: detecting the residual power of a battery of the mobile terminal; displaying, at a self-emissive display unit, an image which includes a background portion and a non-background portion; and controlling the self-emissive display unit based on the detected residual power so that the brightness of the non-background portion is higher than that of the background portion.
Preferably the method further comprises: comparing the detected residual power with a previously stored reference value, wherein the controlling is performed based on the comparison. Preferably the brightness of the background portion is less than or equal to about 1 cd/m². Preferably the brightness of the non-background portion is in the range of about 10 to about 300 cd/m². Preferably the non-background portion includes at least one of the following: a still image, a video image and text.

Another aspect of the invention provides a display as an organic light emitting display device, a battery supplying power to each device of the mobile terminal, a battery residual capacity detector detecting the residual capacity of the battery, a memory storing a graphic user interface for a power saving mode and a controller converting and establishing a graphic user interface displayed on the display into the graphic user interface for the power saving mode stored in the memory, when the residual capacity value of the battery is below a reference value by comparing the detected residual capacity value of the battery with a preset reference value.

Preferably the battery (which functions as an internal power source) is adapted to supply power for the self-emissive display unit (organic light emitting display device), that is, the battery is adapted that the mobile terminal does not require an external power source, and therefore the mobile terminal is preferably not connected to any external power source.

The self-emissive display unit (organic light emitting display device) preferably comprises a display portion adapted to display an image which preferably comprises a surface area in the range of 2 cm² and 2500 cm², more preferably in the range of 9 cm² and 280 cm², and still more preferably in the range of 12 cm² and 180 cm².

The mobile terminal preferably comprises a detector adapted to detect and a non-background portion of the display unit. The detector preferably comprises a means for detecting at least one of a still image, a video image and text within the image, that is, the detector is preferably adapted to separate the image data into a non-background portion comprising at least one of a still image, a video image and text and into a background portion comprising none of a still image, a video image and text.

The predetermined reference value is preferably set to 50%, more preferably 20%, more preferably 15%, more preferably 10% and still more preferably 5% of the maximum capacity of the battery.

Preferably, when the residual capacity of the battery is equal to or lower than the predetermined value, the maximum brightness of the background portion is reduced to less then 50% (more preferably 30%, more preferably 10%, more preferably 5% and still more preferably 2%) of the maximum brightness of the non-background portion. During the reduction of the brightness of the background portion, the gray levels of the background portion are being reduced proportionally so that the gray level ratios (brightness ratios) of different areas of the background portion are maintained.

Furthermore it is preferred that, when the residual capacity of the battery is equal to or lower than the predetermined value, the maximum brightness of the background portion is reduced with respect to the maximum brightness of the non-background portion according to the ratio of the residual capacity of the battery to the maximum capacity of the battery. During this reduction of the brightness of the background portion, the gray levels of the background portion are being reduced proportionally so that the gray level ratios (brightness ratios) of different areas of the background portion are maintained.

Another aspect of the invention provides a mobile terminal, comprising: a detector configured to detect the residual power of a battery of the mobile terminal; a self-emissive display unit configured to display an image which includes a background portion and a non-background portion; and a controller configured to control the display unit based on the detected residual power so that the brightness of the non-background portion is higher than that of the background portion.
Preferably the terminal further comprises a comparator configured to compare the detected residual power with a previously stored reference value, wherein the controller is further configured to control the display unit based on the comparison. Preferably the self-emissive display unit is an organic light emitting display unit.
Another aspect of the invention provides a mobile terminal, comprising: a self-emissive display unit configured to display an image; a memory configured to store first and second graphic user interfaces (GUIs), wherein the first GUI is adapted to display an image at a first brightness and the second GUI is adapted to display an image at a second brightness different from the first brightness; and a controller configured to select one of the first and second GUIs based on the residual power of a battery of the mobile terminal.
Preferably the first brightness is greater than the second brightness. Preferably the controller is further configured to select one of the two GUIs based on user input. Preferably the mobile terminal further comprises an input unit configured to receive user input so as to select the second GUI. Preferably the second brightness is less than about 1 cd/m². Preferably the first brightness is in the range of about 10 to about 300 cd/m². Preferably the mobile terminal further comprises a battery residual power detector configured to detect the residual power of the battery, wherein the controller is further configured to control the display unit based on the detected residual power.
Another aspect of the invention provides a mobile terminal, comprising: a detector configured to detect the residual power of a battery of the mobile terminal; a comparator configured to compare the detected residual power with a previously stored reference value; an organic light emitting display unit configured to display an image which includes a background portion and a non-background portion; and a controller configured to control the display unit, based on the detected residual power being less than the previously stored reference value, such that the brightness of the non-background portion is higher than that of the background portion.
Preferably the brightness of the background portion is less than about 1 cd/m² and the brightness of the non-background portion is in the range of about 10 to about 300 cd/m². Preferably the detector comprises: a multiplexer configured to transmit an analog signal corresponding to a current value output from the battery; and an A/D converter configured to convert the analog signal received from the multiplexer into a digital signal.

### BRIEF DESCRIPTION OF THE DRAWINGS

FIG. 1 is a block diagram showing a construction of a mobile terminal according to an embodiment of the present invention.

FIG. 2 is a block diagram showing a construction of a battery residual capacity detector as shown in FIG. 1.

FIG. 3 is a block diagram showing a construction of an organic light emitting display panel as a display as shown in FIG. 1.

FIG. 4 is a cross-sectional view for a specified region (I-I') in FIG. 3.

FIG. 5 is a flow chart illustrating a method for reducing power consumption of a mobile terminal according to an embodiment of the present invention.

### DETAILED DESCRIPTION OF CERTAIN INVENTIVE EMBODIMENTS

Hereinafter, embodiments of the present invention will be described in a more detailed manner with reference to the accompanying drawings.

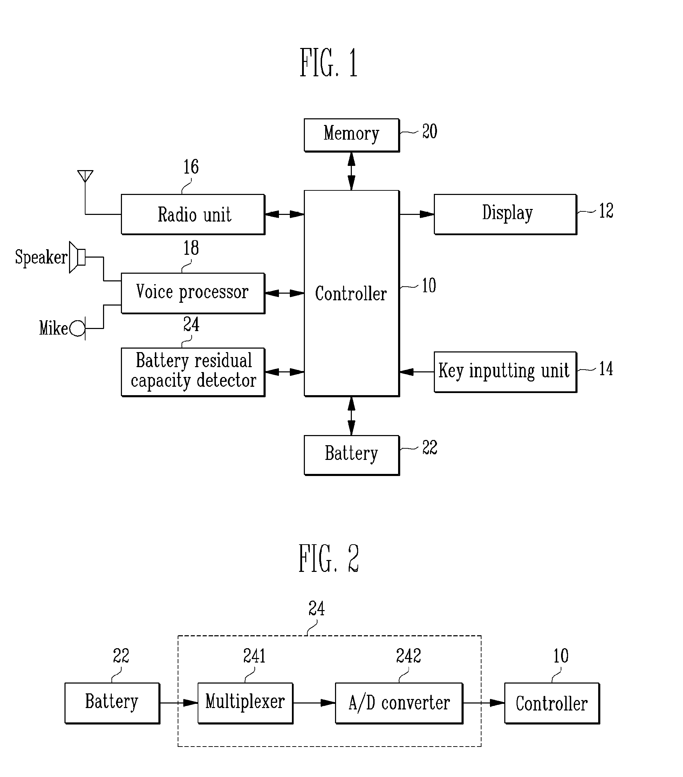

FIG. 1 is a block diagram showing a construction of a mobile terminal according to an embodiment of the present invention.

As the mobile terminal, there are various applications, such as a cellular phone (a mobile communication terminal), personal digital assistants (PDAs) and a portable multimedia player (PMP), etc. In Fig. 1, a cellular phone of the mobile terminal, that is, a mobile communication terminal will be described as one example.

In one embodiment, as shown in FIG. 1, the mobile terminal includes a display 12, for example, an organic light emitting display device, a battery 22 supplying a power to each device of the mobile terminal, a battery residual capacity detector 24 detecting the residual capacity of the battery. The mobile terminal also may include a memory 20 storing a graphic user interface (hereinafter, referred to as 'GUI') for a power saving mode and a controller 10 converting and establishing a GUI displayed on the display into the GUI for a power saving mode stored in the memory 20, when the residual capacity value of the battery 22 is below a previously stored reference value by comparing the detected residual capacity value of the battery 22 with a preset predetermined reference value.

In one embodiment, in order to perform a role of a mobile terminal, it may further include a key inputting unit 14, a radio unit 16, and a voice processor 18.

The key inputting unit 14, which is a user input unit for interfacing with a user, includes various function keys and a plurality of keys for inputting a call or a character and outputs data corresponding to a key pressed by a user to the controller 10. In one embodiment, the user can establish a power saving mode of a mobile terminal by using the key inputting unit 14.

In this embodiment, the power saving mode is that a GUI displayed on the display 12 depending on the residual capacity of the battery 22 is converted and established into a GUI for a power saving mode.

The GUI for a power saving mode, which is a GUI preset in the memory 20, is a GUI displaying the same contents with a GUI displayed on a general mode other than a power saving mode, while minimizing the power consumption of a battery.

In one embodiment, the GUI for a power saving mode is applied to a mobile terminal adopting any self-emissive device such as an organic light emitting display device, wherein it converts a background screen portion occupying many regions of the screen into a black tone, that is, low brightness, and implements an image or a text portion occupying a specified region of the screen at brightness higher than the same (low) brightness.

In one embodiment, in a whole screen displayed on the display, the brightness of R, G and B sub-pixels constituting each pixel corresponding to the background screen is implemented to be below about 1 cd/m², and the brightness of R, G and B sub-pixels constituting each pixel corresponding to the portions displaying the image or a text is implemented to be about 10 to about 300 cd/m².

In one embodiment, when the GUI for a power saving mode is displayed by limiting the background screen portion occupying many regions of the screen to be light-emitted at low brightness, it can light emit even less light than in a general mode, thereby enabling to reduce power consumption.

an organic light emitting display device is adopted.

In one embodiment, the display device may be an active organic light emitting display device.

The display displays the GUI for a user input as to whether a user uses a power saving mode, and it may display a signal corresponding to a level of residual capacity of the battery received from the controller 10.

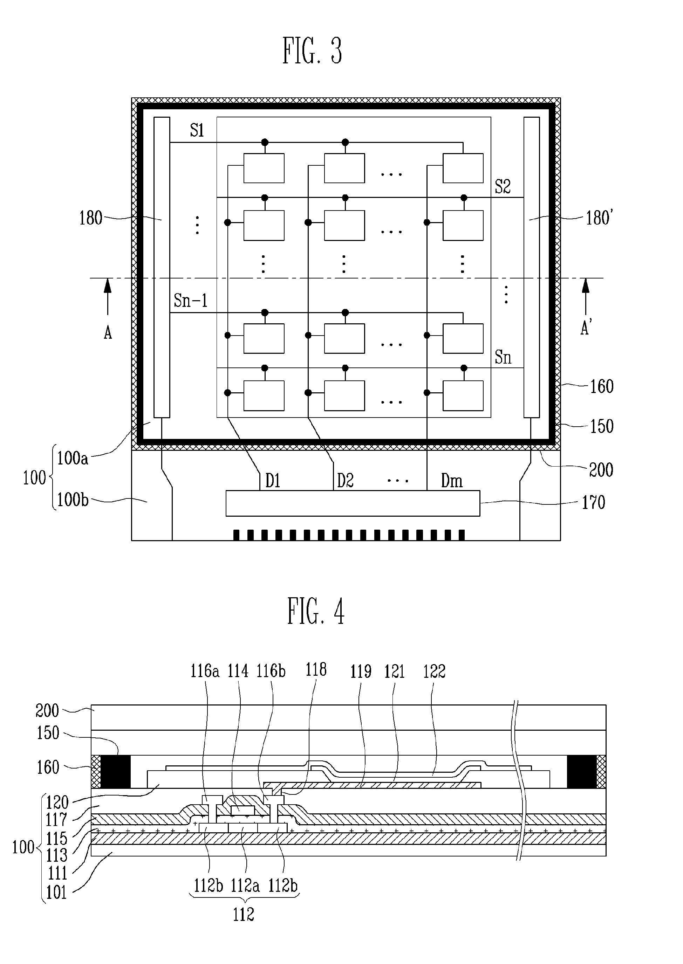

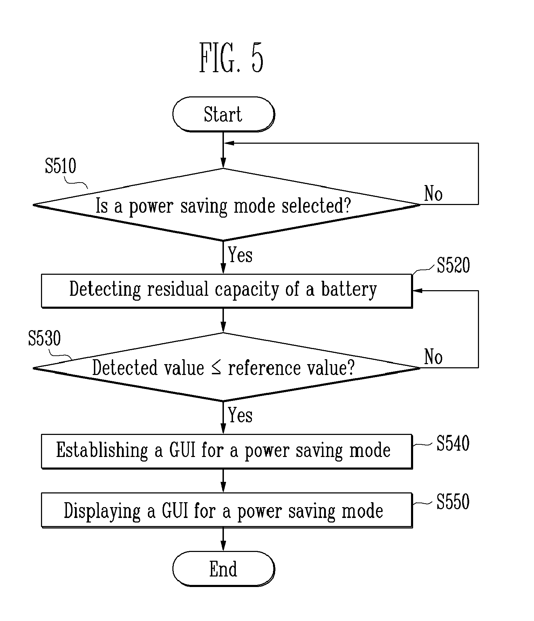

The organic light emitting display device adopted in the display 12 will be described in more detail using the following FIGS. 3 and 4.

The radio unit 16 controls a transmission/reception of voice data and control data under the control of the controller 10. The voice processor 18 outputs the voice data received from the radio unit 16 through a speaker and outputs a voice signal received from a mike as data to the radio unit 16, under the control of the controller 10. Also, when the radio unit 16 receives an incoming call under the control of the controller 10, the voice processor 18 outputs a bell sound through a speaker.

In one embodiment, the controller 10 performs a role to control an overall operation of a mobile terminal. In one embodiment, it performs a control for establishing a GUI for a power saving mode of a mobile terminal and controls an operation of a mobile terminal in the power saving mode.

In this embodiment, the controller 10 converts and establishes the GUI displayed on the display 12 into the GUI for a preset power saving mode stored in the memory 20, if the detected residual capacity value of the battery is below the reference value by comparing the detected residual capacity value of the battery 22 with the preset reference value through the battery residual capacity detector 24.

The battery 22 is mounted on a mobile terminal to supply a predetermined power to each device of the mobile terminal, and the battery residual capacity detector 24 detects the residual capacity of the battery mounted on the mobile terminal to transmit it to the controller 10.

FIG. 2 is a block diagram showing a construction of a battery residual capacity detector as shown in FIG. 1.

In one embodiment, as shown in FIG. 2, a battery residual capacity detector 24 includes a multiplexer 241 transmitting an analog signal corresponding to a current value output from a battery 22 to an A/D converter 242 and an A/D converter 242 converting the analog signal received from the multiplexer 241 into a digital signal to output it to a controller 10. The battery residual capacity detector 24 may detect the residual capacity value of the battery based on the current value output from the battery through the construction and the operation, and converts it into a digital signal to transmit it to the controller 10.

However, the battery residual capacity detector 24 as shown in FIG. 2 is merely exemplary, and a battery residual capacity detector having different construction performing substantially the same operation can be used.

FIG. 3 is a block diagram showing a structure of an organic light emitting display panel according to one embodiment and FIG. 4 is a cross-sectional view for a specified region (I-I') in FIG. 3.

Referring to FIGS. 3 and 4, an organic light emitting display device includes a substrate 100, a sealing substrate 200, a frit material 150 and reinforcing material 160. For convenience, the substrate 100 will be described by dividing into two examples as follows: a substrate 100 meaning a substrate including an organic light emitting diode and a deposition substrate 101 meaning a substrate to be a base on which an organic light-emitting diode is formed.

The substrate 100, which is a plate including an organic light emitting element, includes a pixel region 100a in which at least one organic light emitting configured of a first electrode 119, an organic layer 121 and a second electrode 122 is formed, and a non-pixel region 100b formed in the extension of the pixel region 100a. In the explanation of the following specification, the pixel region 100a means a region in which a predetermined image is displayed due to light emitted from the organic light emitting element, and the non-pixel region 100b means all regions other than the pixel region 100a on the substrate 100.

The pixel region 100a includes a plurality of scan lines (S I to Sm) arranged in a row direction and a plurality of data lines (D 1 to Dm) arranged in a column direction, and a plurality of pixels receiving a signal from a driver integrated circuit 300 for driving the organic light-emitting diode are formed in the scan lines (S 1 to Sm) and the data lines (D 1 to Dm).

Also, in the non-pixel region 100b, a driver IC 300 for driving the organic light emitting element and metal wirings electrically connected to the scan lines (S1 to Sm) and the data lines (D1 to Dm) of the pixel region, respectively, are formed. In one embodiment, the driver IC 300 includes a data driver 170 and scan drivers 180 and 180'.

Also, the organic light emitting element is driven in an active matrix approach and therefore, the structure thereof will be schematically explained with reference to FIG. 4.

A buffer layer 111 is formed on a base substrate 101 in order to prevent the substrate 100 from damaging due to factors such as heat from outside, etc., and the buffer layer 111 is made of insulating material such as silicon oxide SiO₂ or silicon nitride Sinx, etc.

Also, on at least any one region of the buffer layer 111 a semiconductor layer 112 including an active layer 112a and an ohmic contact layer 112b is formed. On the semiconductor layer 112 and the buffer layer 111 a gate insulating layer 113 is formed, and on one region of the gate insulating layer 113 a gate electrode 114 having the size corresponding to the width of the active layer 112a is formed.

An interlayer insulating layer 115 is formed on the gate insulating layer 113 including the gate electrode 114, and source and drain electrodes 116a, 116b are formed on a predetermined region on the interlayer insulating layer 115.

The source and drain electrodes 116a,116b are formed to connect to an one region wherein the ohmic contact layer 112b is exposed, respectively, and a planarization layer 117 is formed on the interlayer insulating layer 115 including the source and drain electrodes 116a,116b.

On one region of the planarization layer 117 a first electrode 119 is formed and at this time, the first electrode 119 is connected to one region exposed to any one of source and drain electrodes 116a, 116b by means of a via hole 118.

Also, on the planarization layer 117 including the first electrode 119 a pixel defined film 120 having an opening part exposing at least one region of the first electrode 119 is formed. On the opening part of the pixel defined film 120 an organic layer 121 is formed, and on the pixel defined film 120 including the organic layer 121 a second electrode layer 122 is formed and at this time, a passivation layer can be further formed on the upper part of the second electrode layer 122.

At this time, since the organic layer 121, which is provided between the first electrode layer 119 and the second electrode layer 122, includes an organic light emitting layer, it forms an excitor being an electron-hole pair by combining a hole supplied from the anode and an electron supplied form the cathode in the organic light emitting layer and then is light-emitted by energy generated in returning the excitor back to a ground state.

Here, the generated excitor forms a singlet excitor or a triplet excitor depending on a spin coupling type. The probability that the singlet excitor can be formed is one fourth and the probability that the triplet excitor can be formed is three fourths.

Generally, since a base state of an organic molecule is a singlet state, the organic molecule can be transited to a base state while emitting light by means of the singlet excitor. This is named as fluorescence and to adopt such organic molecule is a fluorescent organic light emitting element.

However, it is prohibited that the triplet excitor is transited to a base state, which is a single state, while emitting light, and thus, the excitor of about 75 % is wasted. Accordingly, the triplet excitor can be transited to a base state from a triplet state, while emitting light, by using a phosphorescent dopant with a large spin-orbit coupling in the light emitting layer. This is named as phosphorescence and to adopt such organic molecule is a phosphorescent organic light emitting element.

Any one of the phosphorescent organic light emitting element and the fluorescent organic light emitting element can be adopted as the organic light emitting display device of the present invention.

Also, the sealing substrate 200, which is a member for sealing at least a pixel region 100a of a substrate on which the organic light emitting element is formed, can be made of transparent material in the case of front side light emitting or both sides light emitting, and be made of opaque material in the case of rear side light-emitting. In one embodiment, glass can be used in the case of the front side light-emitting.

In one embodiment, the sealing substrate 200 is configured as a plate-type, and the sealing substrate 200 seals at least a pixel region of a substrate on which the organic light emitting element is formed. In one embodiment every region other than a pad unit of the data driver is sealed.

The frit 150, which is formed in the space between the sealing substrate 200 and the non-pixel region 100b of the substrate 100, encapsulates the pixel region 100a so that air cannot be infiltrated. The frit originally means glass raw material including additives in the form of a powder, however, in the glass technical field it commonly means glass formed by melting the frit, and therefore, in one embodiment, it will be used by including both of them.

The frit 150, which is made in a closed-curve form at a constant interval from an edge of a side bonding the sealing substrate to the substrate 100, is configured of glass material, moisture absorbent for absorbing (laser-) light, and a filler for reducing thermal expansion coefficient. The frit 150 is applied to the sealing substrate 200 in a frit paste state and is cured after being melted between the sealing substrate 200 and the substrate 100 by irradiation comprising infrared rays (preferably laser radiation), encapsulating the sealing substrate 200 and the substrate 100.

In one embodiment, the moisture absorbent includes a compound including a transition metal, and for example, it can include V₂O₅.

In this embodiment, the line to be formed by the frit is from about 0.5mm to about 1.5mm in width. In the case of about 0.5mm or less, a defect can frequently be occurred when sealing and a problem can be caused even in adhesion and in the case of about 1.5mm or more, a dead space of an element becomes large so that the product quality is deteriorated.

In one embodiment, the thickness of the frit 150 is from about 10µ to about 20µ. In case that the thickness of the frit is about 20µ or more, a large amount of energy is required for sealing a large amount of the frit 150 at the time of laser sealing. In this embodiment, the power of laser may be heightened or the speed of the scan may be lowered, resulting in that thermal damage may be generated. Also, in the case of about 10µ or less in thickness, a defect of a frit application state can frequently be occurred.

In one embodiment, the side of the substrate is not overlapped with metal wiring other than an interval of metal wiring directly connected to the driver integrated circuit, if possible. Since the frit 150 is irradiated by the laser or the infrared rays as described above, the metal wiring may be damaged when the frit 150 is overlapped with the metal wiring.

The reinforcing material 160, which is formed on a side of a line of the frit 150, prevents the organic light emitting display device from easily breaking when all of the substrate 100, the sealing substrate 200 and the frit 150 are glass, and serves as encapsulating material when the frit 150 is not adhered by being melted and its adhesion is weaken. The reinforcing material 160 can be formed by spacing from the frit 150 at a predetermined interval or by contacting to the frit 150.

As material of the reinforcing material 160, resins which are naturally cured, thermally cured or UV cured by being applied in liquid state, can be used. For example, acrylate cyanide as material to be naturally cured, acrylate as material to be thermally cured at a temperature less than 80°C and epoxy, acrylate and urethane acrylate as material to be UV cured can be used.

FIG. 5 is a flow chart showing a method of reducing power consumption of a mobile terminal according to an embodiment of the present invention.

Referring to FIGS. 1 to 5, first a user can previously set, through a key inputting unit 14, that a GUI displayed on a display 12 is converted into a GUI for a power saving mode, when the residual capacity of a battery is short. (S 510).

If the user sets the mobile terminal on a power saving mode, the battery residual capacity detector 24 detects the residual capacity of the battery to transmit the detected residual capacity value to a controller 10. (S 520)

At this time, the controller 10 compares the residual capacity value of the battery transmitted from the battery residual capacity detector 24 with the preset reference value. (S 530)

If the residual capacity value of the battery is determined to be below the reference value by comparing the residual capacity value of the battery with the preset reference value, the GUI for a power saving mode stored in the memory 20 is converted and established. (S 540)

Accordingly, as a GUI displayed on the display 12, the converted and established GUI for a power saving mode is displayed. (S 550)

At this time, the GUI for a power saving mode is a GUI displaying the same contents with a GUI displayed on a general mode other than a power saving mode, while minimizing the power consumption of a battery.

In one embodiment, the GUI for a power saving mode is applied to a mobile terminal adopting a self-emissive display such as an organic light emitting display device, which is a self-emission element, as the display, wherein it is implemented by converting a white tone occupying many regions of the screen, that is, a background screen portion having high brightness, into a black tone, that is, low brightness, and converting an image and a text portion of a black tone occupying a specified region of the screen into a white tone.

In one embodiment, the GUI for a power saving mode is characterized in that in a whole screen displayed on the display, the brightness of R, G and B sub-pixels constituting each pixel corresponding to the background screen is implemented to be below about 1 cd/m², and the brightness of R, G and B sub-pixels constituting each pixel corresponding to the portions displaying the image or a text is implemented to be about 10 to about 300 cd/m².

In one embodiment, when the GUI for a power saving mode is displayed by limiting the background screen portion occupying many regions of the screen to be light-emitted at low brightness, it can light emit even less light than in a general mode, thereby enabling to reduce power consumption.

According to at least one embodiment, when a mobile terminal adopts a self-emissive display, wherein in the case that the residual capacity of a battery is smaller than a reference value depending on the residual capacity of the battery, a graphic user interface (GUI) of a display is implemented to be converted into a GUI for a power saving mode in which power consumption is reduced, thereby having an advantage that a using time of a battery of the mobile terminal is extended by substantially saving power consumption.

While the above description has pointed out novel features of the invention as applied to various embodiments, the skilled person will understand that various omissions, substitutions, and changes in the form and details of the device or process illustrated may be made without departing from the scope of the invention. Therefore, the scope of the invention is defined by the appended claims rather than by the foregoing description. All variations coming within the meaning and range of equivalency of the claims are embraced within their scope.

## Claims

1. A method of reducing power consumption of a mobile terminal which comprises a self-emissive display unit (12) and a battery (22) adapted to supply power for the self-emissive display unit (12), comprising:
detecting the residual capacity of the battery (22) of the mobile terminal;
displaying a background portion and a non-background portion of an image on the self-emissive display unit (12); and
controlling the self-emissive display unit (12) based on the detected residual capacity of the battery (22) so that the brightness of the non-background portion is higher than the brightness of the background portion.

2. The method of claim 1, further comprising the step of comparing the detected residual capacity of the battery (22) with a predetermined reference value, wherein the brightness of the non-background portion is set higher than the brightness of the background portion when the detected residual capacity of the battery (22) is equal to or lower than the predetermined reference value.

3. The method according to one of the preceding claims, wherein the brightness of the background portion is set to be less than or equal to 1 cd/m² and /or wherein the brightness of the non-background portion is set to be in the range of 10 to 300 cd/m².

4. The method according to one of the preceding claims, wherein a background portion and a non-background portion are determined prior to the step of displaying an image.

5. The method of claim 4, wherein the non-background portion is determined as a display portion which includes at least one of the following: a still image, a video image and text.

6. The method according to one of the preceding claims, wherein the predetermined reference value amounts to 10% of the maximum capacity of the battery (22).

7. The method according to one of the preceding claims, wherein the ratio of the brightness of the background portion when the detected residual capacity of the battery (22) is equal to or lower than the predetermined reference value and the brightness of the background portion when the detected residual capacity of the battery (22) is higher than the predetermined reference value is set to be lower than the ratio of the displayed brightness of the non-background portion when the detected residual capacity of the battery (22) is equal to or lower than the predetermined reference value and the brightness of the non-background portion when the detected residual capacity of the battery (22) is higher than the predetermined reference value.

8. A mobile terminal, comprising:
a self-emissive display unit (12) configured to display an image which includes a background portion and a non-background portion;
a battery (22) adapted to supply power for the self-emissive display unit (12);
a detector (24) configured to detect the residual capacity of a battery (22) of the mobile terminal; and
a controller (10) configured to control the display unit (12) based on the detected residual capacity of a battery (22) so that the brightness of the non-background portion is higher than that of the background portion.

9. The mobile terminal of claim 8, further comprising a comparator configured to compare the detected residual capacity of a battery (22) with a predetermined reference value, wherein the controller (10) is further configured to control the display unit (12) based on the comparison.

10. The mobile terminal according to one of the claims 8 and 9, wherein the self-emissive display unit (12) is an organic light emitting display unit.

11. The mobile terminal according to one of the claims 8-10, comprising:
a memory (20) configured to store first and second graphic user interfaces, wherein the first graphic user interface is adapted to display an image at a first brightness and the second graphic user interface is adapted to display an image at a second brightness different from the first brightness; and
wherein the controller (10) is configured to select one of the first and second graphic user interfaces based on the residual capacity of a battery (22) of the mobile terminal.

12. The mobile terminal of claim 11, wherein the first brightness is greater than the second brightness and/or wherein the controller (10) is further configured to select one of first and second graphic user interfaces based on user input.

13. The mobile terminal of claim 12, further comprising an input unit (14) configured to receive a user input so as to select the second graphic user interface.

14. The mobile terminal according to one of claims 11-13, wherein the second brightness is less than 1 cd/m² and/or wherein the first brightness is in the range of 10 to 300 cd/m².

15. The mobile terminal according to one of claims 8-14, wherein the detector (24) comprises:
a multiplexer (241) configured to transmit an analog signal corresponding to a current value output from the battery (22); and
an A/D converter (242) configured to convert the analog signal received from the multiplexer (241) into a digital signal.

## Amended claims

### Amended claims in accordance with Rule 137(2) EPC.

**1.** A method of reducing power consumption of a mobile terminal which comprises a self-emissive display unit (12) and a battery (22) adapted to supply power for the self-emissive display unit (12), comprising:
detecting the residual capacity of the battery (22) of the mobile terminal;
comparing the detected residual capacity of the battery (22) with a predetermined reference value;
displaying a background portion and a non-background portion of an image on the self-emissive display unit (12); and
controlling the self-emissive display unit (12) based on the detected residual capacity of the battery (22);
wherein the brightness of the non-background portion is set higher than the brightness of the background portion when the detected residual capacity of the battery (22) is equal to or lower than the predetermined reference value, and
wherein the brightness of the background portion is set to be less than or equal to 1 cd/m² and /or wherein the brightness of the non-background portion is set to be in the range of 10 to 300 cd/m².

**2.** The method according to claim 1, wherein a background portion and a non-background portion are determined prior to the step of displaying an image.

**3.** The method of claim 2, wherein the non-background portion is determined as a display portion which includes at least one of the following: a still image, a video image and text.

**4.** The method according to one of the preceding claims, wherein the predetermined reference value amounts to 10% of the maximum capacity of the battery (22).

**5.** The method according to one of the preceding claims, wherein the ratio of the brightness of the background portion when the detected residual capacity of the battery (22) is equal to or lower than the predetermined reference value and the brightness of the background portion when the detected residual capacity of the battery (22) is higher than the predetermined reference value is set to be lower than the ratio of the displayed brightness of the non-background portion when the detected residual capacity of the battery (22) is equal to or lower than the predetermined reference value and the brightness of the non-background portion when the detected residual capacity of the battery (22) is higher than the predetermined reference value.

**6.** A mobile terminal, comprising:
a self-emissive display unit (12) configured to display an image which includes a background portion and a non-background portion;
a battery (22) adapted to supply power for the self-emissive display unit (12);
a detector (24) configured to detect the residual capacity of a battery (22) of the mobile terminal;
a memory (20) configured to store first and second graphic user interfaces, wherein the first graphic user interface is adapted to display an image at a first brightness and the second graphic user interface is adapted to display an image at a second brightness different from the first brightness; and
a controller (10) configured to control the display unit (12) based on the detected residual capacity of a battery (22);
wherein the controller (10) is configured to select one of the first and second graphic user interfaces based on the residual capacity of a battery (22) of the mobile terminal, and
wherein the second brightness is less than 1 cd/m² and/or wherein the first brightness is in the range of 10 to 300 cd/m².

**7.** The mobile terminal of claim 6, further comprising a comparator configured to compare the detected residual capacity of a battery (22) with a predetermined reference value, wherein the controller (10) is further configured to control the display unit (12) based on the comparison.

**8.** The mobile terminal according to one of the claims 6 and 7, wherein the self-emissive display unit (12) is an organic light emitting display unit.

**9.** The mobile terminal of claim 6, wherein the first brightness is greater than the second brightness and/or wherein the controller (10) is further configured to select one of first and second graphic user interfaces based on user input.

**10.** The mobile terminal of claim 9, further comprising an input unit (14), wherein a power-saving mode is activated by a user input received by the input unit (14).

**11.** The mobile terminal according to one of claims 6-10, wherein the detector (24) comprises:
a multiplexer (241) configured to transmit an analog signal corresponding to a current value output from the battery (22); and
an A/D converter (242) configured to convert the analog signal received from the multiplexer (241) into a digital signal.
